# EUROPEAN PATENT APPLICATION

(11) **EP 2 251 799 A1**
(43) Date of publication of application: **17.11.2010**
(21) Application number: 10157674.2
(22) Date of filing: 25.03.2010
(51) Int. Cl.: G06F 17/30

(54) **Method for transmitting contents information, recommending contents, and providing reliability for recommended contents, and multimedia device using the same**

(30) Priority: 14.05.2009 KR 20090042071
(71) Applicant: SAMSUNG ELECTRONICS CO., LTD., Suwon-si Gyeonggi-do 442-742 (KR)
(72) Inventor: Park, Jong-chan, Seoul (KR); Seong, Hye-young, Suwon-si (KR); Shim, Bo-kyung, Seoul (KR); Yim, Jin-ho, Suwon-si (KR)
(74) Representative: Waddington, Richard

(57) **Abstract**

A method for transmitting contents information, a method for recommending contents, a method for providing reliability for recommend contents information, and a multi-media device using the same are provided. According to the present method for transmitting contents information, received contents information is renewed based on contents information input from a user, and the renewed contents information is transmitted. Accordingly, contents information accumulated by a user is received and thus reliability of the received contents information can be guaranteed. In addition, as users send and receive contents information directly from each other without going through a server, a Social Network Service may be provided.

## Description

### BACKGROUND OF THE INVENTION

### 1. Field of the Invention

Apparatuses and methods consistent with the present invention relate to a method for transmitting contents information, a method for recommending contents, a method for providing reliability for recommended contents, and a multimedia device using the same, and more particularly, to a method for transmitting contents information, a method for recommending contents, a method for providing reliability for contents recommending by updating received contents information, and a multimedia device using the same.

### 2. Description of the Related Art

Recently, a multimedia device for receiving and generating multimedia contents have become more diversified and more multifunctional, and thus a user is able to receive and watch multimedia contents anytime and anywhere. In addition, the number of service type providing multimedia contents and the number of service providers are gradually increasing.

As more multimedia contents are being provided, a user has difficulties checking out and viewing the contents information, and is only able to collect information regarding multimedia information via a personal computer or a telephone.

In order to resolve the above issues, an Electronic Program Guide (EPG) service providing various broadcasting contents information is being used, however EPG provides only some objective information regarding broadcasting contents and does not provide specific and candid opinions from a user who already watched the broadcasting contents.

Although there is a service to provide opinions and critics from broadcasting experts, this kind of service is also problematic in that the service lacks reliability since the opinions and critics belong to only a few experts.

Therefore, a method that allows a user to select desired multimedia contents more easily and conveniently, and with confidence in their reliability is required.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Other features of the invention will be apparent from the dependent claims, and the description which follows.

The present invention provides a method for transmitting contents information, a method for recommending contents, a method for providing reliability for contents recommending in order to send and transmit reliable contents information based on contents information accumulated by users.

A method for transmitting contents information, according to an exemplary embodiment of the present invention, comprises renewing contents information received from a first device using contents information input from a user and transmitting the renewed contents information to a second device.

The contents information may include at least one of graded information regarding a score, recommendation level, reliability, quality, and viewing grade of the contents.

The renewing may renew the contents information received from the first device using the input contents information and contents information which at least one of the first device has renewed and received consecutively.

The contents information which has been renewed consecutively in at least one of the first device may be contents information obtained by averaging and renewing the contents information input to at least one of the first device consecutively, and the renewing may average the contents information input by a user and the contents information renewed and received consecutively, and renew the received the contents information which has been renewed and received consecutively.

The transmitting may transmits the renewed contents information directly to an IP address of the second device according to a P2P method.

The transmitting may comprise displaying a list of devices capable of receiving the renewed contents information and transmitting the renewed contents information to the first device selected from the list.

The contents information may include information regarding broadcasting contents, and the method may further comprise displaying the information regarding broadcasting contents received from the first device on an EPG screen.

The contents information may include a score regarding broadcasting contents, and the method may further comprise arranging broadcasting contents broadcast in a same time frame based on the score.

The contents information may include at least one of information regarding broadcasting contents which are currently broadcast, already broadcast, and will be broadcast.

The transmitting may further comprise transmitting the renewed contents information to a plurality of second devices or transmitting a plurality of renewed contents information regarding a plurality of contents to the second device.

A method for recommending contents, according to an exemplary embodiment of the present invention, comprises renewing information regarding contents recommending based on information input to recommend the contents and recommending the contents by transmitting the renewed information.

A method for providing reliability regarding contents recommending information, according to an exemplary embodiment of the present invention, comprises providing information regarding contents recommending accumulated and generated by at least one peer device and providing the number of the at least one peer device to show reliability of the information regarding recommended contents.

A multi-media device, according to an exemplary embodiment of the present invention, comprises an interface to send and receive contents information and a control unit to renew contents information received from the first device using contents information input by a user, and transmits the renewed contents information to the second device.

The contents information may include at least one of graded information regarding a score, recommendation level, reliability, quality, and viewing grade of the contents.

The control unit may renew contents information received from the first device using the input contents information and the contents information which has been renewed and received consecutively in at least one of the first device.

The contents information which has been renewed consecutively in at least one of the first device is contents information obtained by averaging and renewing the contents information input to at least one of the first device consecutively, and the control unit may average the contents information input by a user and the contents information renewed and received consecutively, and renew the contents information which has been renewed and received consecutively.

The control unit may transmit the renewed contents information directly to an IP address of the second device according to a P2P method.

The multi-media device may further comprises a display unit to display a list capable of receiving the renewed contents information, and the control unit may transmit the renewed contents information to the first device selected from the list.

The multi-media device may include a broadcasting output apparatus to receive broadcasting contents from a broadcasting station or an external device and output them, and the control unit may display information regarding the broadcasting contents received from the first device on an EPG screen.

The contents information may include score information regarding broadcasting contents, and the control unit may arrange broadcasting contents broadcast in a same time frame based on the score.

The contents information is information regarding broadcasting contents, and may include at least one of information regarding broadcasting contents which are currently broadcast, already broadcast, and will be broadcast.

The control unit may transmit the renewed contents information to a plurality of second devices or transmit a plurality of renewed contents information regarding a plurality of contents to the second device.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a block diagram illustrating a TV 100 according to an exemplary embodiment of the present invention;

FIG. 2 is a flow chart provided to explain a method for transmitting contents information according to an exemplary embodiment of the present invention; and

FIG. 3a to FIG. 3c are screens for recommending broadcasting according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

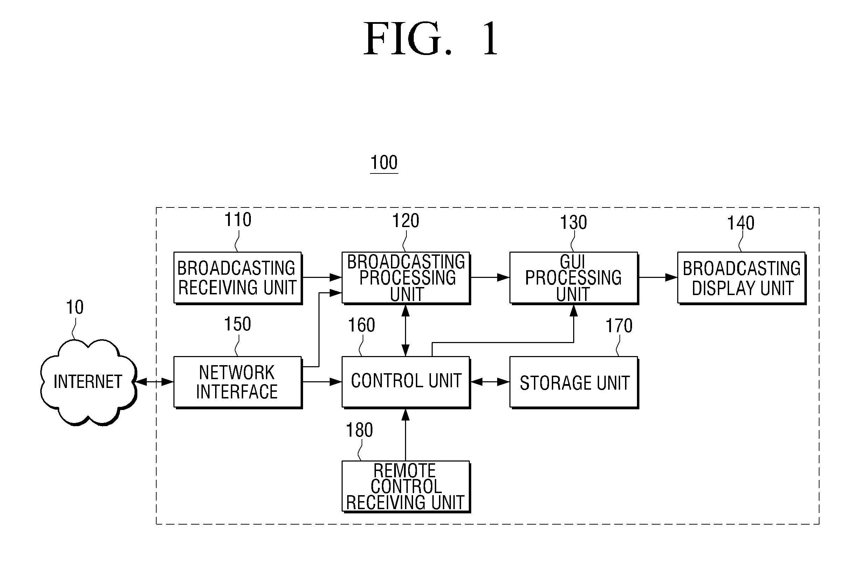

FIG. 1 is a block diagram illustrating a TV 100 according to an exemplary embodiment of the present invention. For convenience of explanation, the TV 100 is illustrated with the Internet 10 in FIG. 1. The TV 100 receives information regarding broadcasting contents (hereinafter, referred to as 'contents information) in external devices via the Internet 10.

As illustrated in FIG. 1, the TV 100 comprises a broadcasting receiving unit 110, a broadcasting processing unit 120, a Graphical User Interface (GUI) processing unit 130, a broadcasting display unit 140, a network interface 150, a control unit 160, a storage unit 170, and a remote control receiving unit 180.

The broadcasting receiving unit 110 demodulates one of broadcastings received with wire or wirelessly via terrestrial, cable or satellite media.

The broadcasting processing unit 120 performs signal processing such as video decoding, video scaling, and audio decoding on an image signal and audio signal received via the broadcasting receiving unit 110 or the control unit 160. The broadcasting processing unit 120 transmits the processed image signal and audio signal to the GUI processing unit 130.

The GUI processing unit 130 generates a GUI to be displayed on a display, and adds the generated GUI and broadcasting contents output from the broadcasting processing unit 120. Specifically, if a user requests contents information or receives contents information from external devices via the Internet 10, the GUI processing unit 130 generates a GUI corresponding to the contents information and displays the generated GUI on a screen.

Contents information broadly represents information regarding broadcasting contents as described above, and specifically represents graded information regarding a score, a recommendation level, reliability, quality, and a viewing grade of broadcasting contents.

For instance, information regarding contents 'A' may include grades such as three stars, 60%, or score 3, and the grade may indicate one of a score, a recommendation level, reliability, quality, and a viewing grade of broadcasting contents.

The contents information received from external devices is information on an average of information received consecutively from at least one external device. For instance, if the first external device inputs score '3' to generate contents information and then transmits the generated contents information to the second external device, and the second external device inputs score '1' to renew the contents information and then transmits the renewed contents information to the TV 100, the contents information received from the second external device is score '2', an average of the two scores received from the two external devices.

More specifically, the first external device transmits the input score '3' to the second external device, and the second external device transmits the average of the score '1' received from the second external device and the score '3' received from the first external device, which is score '2' to the TV 100. Accordingly, the TV 100 receives broadcasting contents information of the score '2'.

The second external device and the TV 100 may receive information on the number of external devices from which contents information is received and averaged in addition to an average of contents information. For instance, the TV 100 may receive not only contents information of score '2' but also information that the contents information is an average of contents information received from two external devices.

Accordingly, when the TV 100 transmits contents information to a separate external device, the contents information which averages contents information including contents information received from the TV 100 may be transmitted. The TV 100 also transmits information on the number of devices used to calculate an average. For instance, if the TV 100 inputs the score '5', the TV 100 renews contents information received from the second external device (the score is '2') as the score '3' (3+1+5/3 devices), and transmits the contents information of the score '3' together with the information that the contents information is received from 3 devices to the third external device.

Accordingly, reliability of contents information can be enhanced as contents information is generated and accumulated by a plurality of devices.

The broadcasting display unit 140 displays a screen of broadcasting contents to which a GUI is added by the GUI processing unit 130, and outputs audio via a speaker.

The network interface 150 serves as a connection path to allow the TV 100 to communicate with an external server or an external device via the Internet 10. Specifically, the network interface 150 receives broadcasting contents from an external server by communicating with an external server via the Internet 10.

The external server may be an IPTV broadcasting service server which provides IPTV broadcasting contents to subscribers via the Internet 10. Accordingly, the TV 100 may receive the IPTV broadcasting contents provided by the IPTV broadcasting service server via the network interface 150, and reproduce the received IPTV broadcasting contents to provide it to subscribers.

The external device may be subscribers who receive IPTV broadcasting contents from the IPTV broadcasting service server. The TV 100 directly receives contents information provided from the external device via the network interface 150, and displays a GUI screen corresponding to the received contents information so that a user may obtain contents information. Specifically, the TV 100 may directly receive contents information from the external device using a P2P method without going through a separate server such as a IPTV broadcasting service server.

There are several ways for an external device to select the TV 100 to transmit contents information. The external device may directly input an IP address to select the TV 100, or the external device may select the TV 100 in a peer list prestored in the external device.

The storage unit 170 stores broadcasting contents and contents information, and may be embodied as a memory, a hard disk drive (HDD), and etc.

The remote control receiving unit 180 transmits a user's command received from a remote control to the control unit 160, and the control unit 160 controls comprehensive operation of the TV 100 according to the user's command received from the remote control receiving unit 180.

In particular, the control unit 160 controls the broadcasting processing unit 120 and the GUI processing unit 130 so that the broadcasting contents that the broadcasting receiving unit 110 receives or the broadcasting contents received from the IPTV broadcasting service server via the Internet 10 may be displayed on the screen, and controls the GUI processing unit 130 so that a GUI corresponding to the contents information received from an external device via the Internet 10 may be displayed on the screen.

If contents information regarding broadcasting contents is received via the remote control receiving unit 180, the control unit 160 renews the contents information received from an external device using the input contents information and transmits the renewed contents information to a separate external device.

For instance, suppose that contents information received from an external device indicates that the score of certain broadcasting contents is '4', and the contents information received from the external device is renewed by two subscribers, that is two external devices consecutively and is provided to the TV 100. If a user inputs the score '1' for the broadcasting contents via the remote control receiving unit 180, the broadcasting contents receives a total of '9' scores by three subscribers. Accordingly, the control unit 160 gets the average of '3' and renews the contents information so that the renewed contents information may be transmitted to a separate external device.

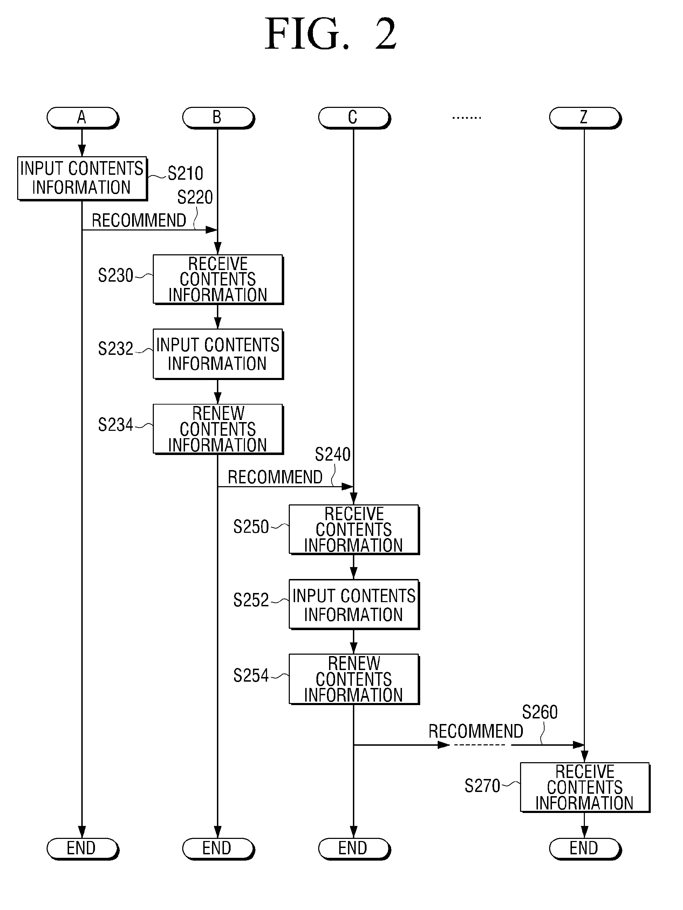

The process of providing contents information to the TV 100 illustrated in FIG. 1 will be explained with reference to FIG. 2. FIG. 2 is a flow chart provided to explain a method for transmitting contents information according to an exemplary embodiment of the present invention.

As illustrated in FIG. 2, if A inputs contents information of certain broadcasting contents to A's TV, (S210) and recommend the broadcasting contents to B (S220), B's TV receives the contents information from A's TV (S230). For instance, if A inputs the score '5' and recommends it to B's TV, B's TV receives the contents information '5'.

If B inputs his or her score regarding the broadcasting contents to B's TV as contents information (S232), B's TV renews the contents information received from A's TV using the input contents information (S234). For instance, if B inputs the score '3', B's TV averages contents information received from A's TV to '4' and renews the contents information accordingly.

If B recommends the broadcasting contents to C (S240), C's TV receives the contents information from B's TV (S250). Accordingly, C recognizes that the score of the broadcasting contents is '4'.

If C inputs his or her score regarding the broadcasting contents to C's TV as contents information (S252), C's TV which received the contents information renews the contents information received from B's TV using the input contents information (S254). For instance, if C inputs the score '4' as contents information, C's TV averages contents information received from B's TV to '4' and renews the contents information accordingly.

Since recommendations are accumulated as shown in the above, Z may receive sound and reliable contents information (S270).

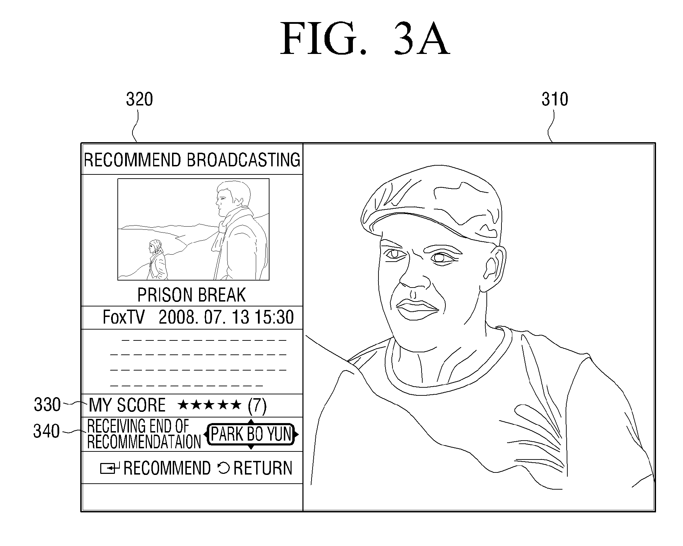

FIG. 3a to FIG. 3c are screens for recommending broadcasting according to an exemplary embodiment of the present invention. In particular, FIG. 3a is a screen for recommending broadcasting.

As illustrated in FIG. 3a, currently viewed broadcasting contents 310 are displayed on the right portion of the screen, and a menu window 320 for recommending the currently viewed broadcasting contents is displayed on the left portion of the screen.

Information regarding the recommended broadcasting contents such as the title, storyline, broadcasting time, and broadcasting channel is displayed on the menu window 320, and score information 330 and a receiving end of recommendation 340 are also displayed.

"Three stars" are displayed in the score information 330 so that a user may identify input score or renewed score of the broadcasting contents. "7" is also displayed to provide information regarding the number of accumulated users.

A receiving end of recommendation 340 displays information regarding peers to whom the broadcasting contents are recommended, and a user may change peers by manipulating a remote controller.

In the exemplary embodiment of the present invention, the name of only one peer is displayed. If the broadcasting contents are recommended to a plurality of peers, the names of the plurality of peers may be displayed. If a plurality of peers form a group, the name of the group may be displayed. In the exemplary embodiment of the present invention, contents information is recommended by transmitting the contents information according to a P2P method without going through a separate server, and thus if the IP address of a peer matching the name of the peer is already stored, the name of the peer is directly displayed. If the IP address of a peer does not match the name of the peer, a window for inputting the IP address of the peer may be displayed or the IP address, not the name of the peer, may be displayed.

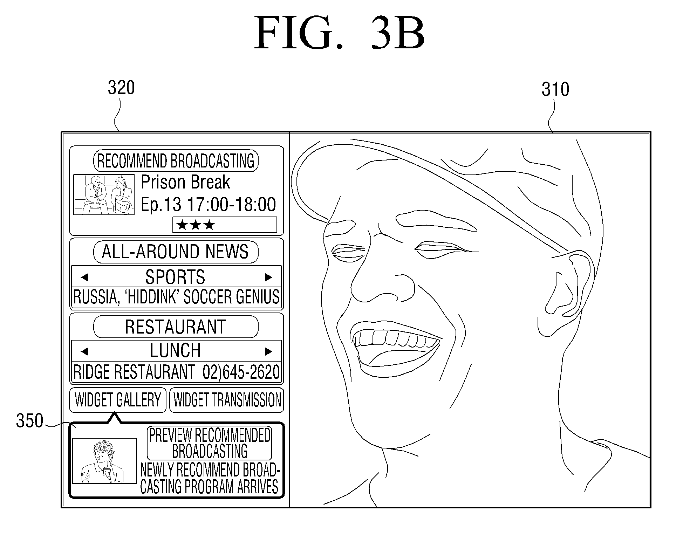

FIG. 3b is a screen illustrating a received recommended broadcasting. As illustrated in FIG. 3b, a message informing the arrival of the recommended program is displayed on one side of the screen, and if a user request for viewing the recommended broadcasting is input, the recommended broadcasting is displayed on the screen.

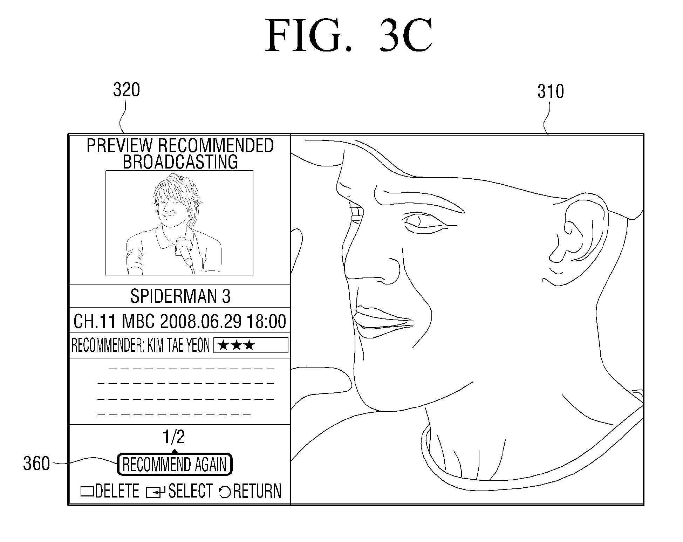

FIG. 3c is a screen for re-recommending broadcasting. If a user who received recommendation of broadcasting wishes to recommend the broadcasting to another user, the user may select the re-recommendation item 360 on the menu window 320 to input his or her score so that the score is renewed based on the score input by the user who received recommendation and the renewed score may be transmitted to another user.

As such, by receiving contents information accumulated by users, the reliability of the received contents information may be guaranteed. In addition, as contents information is sent and received directly among users without going through a server, a Social Network Service may be provided.

In the exemplary embodiment of the present invention, a TV is taken as an example of a broadcasting receiving apparatus which receives broadcasting contents, but this is only an example. Any apparatus capable of receiving broadcasting contents such as an MP3 and PMP can be realized as a broadcasting receiving apparatus instead of a TV.

Contents information for recommending broadcasting contents may include not only information regarding currently broadcasting contents but also information regarding broadcasting contents which have been already broadcast and will be broadcast.

In the exemplary embodiment of the present invention, contents information is received from a single external device, but contents information regarding the same contents may be received from a plurality of external devices. In this case, if the paths receiving and renewing contents information are overlapped with each other, contents information may be renewed excluding the overlapped paths or contents information of which reliability is verified by many users may be selected.

In the exemplary embodiment of the present invention, contents information regarding the same broadcasting contents is received. However, if contents information regarding different broadcasting contents is received, for example, if a plurality of contents information regarding broadcasting contents during the same time frame or broadcasting contents in the same kind is received, the information may be arranged based on contents information. Specifically, if the scores '3 ' '4', and '5' are received for broadcasting contents 'a' 'b', and 'c' which are broadcast in the same time frame, the broadcasting contents may be provided in the order of 'c'-'b'-'a' so that the TV 100 may better assist a user in viewing broadcasting contents by allowing the user to identify the contents information more intuitively.

In the exemplary embodiment of the present invention, contents are received from a contents provider or a contents server, and contents information is received from a external device, however the technical feature of the present invention may be applied when contents and contents information are received and recommended from an external device. Accordingly, the present invention does not have to be limited to a broadcasting receiving apparatus which receives broadcasting, and the present invention is applicable to any apparatus capable of sending and receiving contents.

In the exemplary embodiment of the present invention, contents information is displayed in a separate window, but the contents information may be also displayed on an EPG screen.

As described above, according to the present invention, reliability of received contents information may be guaranteed as contents information accumulated by users is received. In addition, as users send and receive contents information directly with each other without going through a server, a Social Network Service may be provided.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for transmitting contents information, comprising:
renewing contents information received from a first device using contents information input from a user; and
transmitting the renewed contents information to a second device.

2. The method as claimed in claim 1, wherein the contents information includes at least one of graded information regarding a score, recommendation level, reliability, quality, and viewing grade of the contents.

3. The method as claimed in claim 1 or claim 2, wherein the renewing renews the contents information received from the first device using the input contents information and contents information which at least one of the first device has been renewed and received consecutively.

4. The method as claimed in claim 3, wherein the contents information which has been renewed consecutively in the at least one of the first device is contents information obtained by averaging and renewing the contents information input to at least one of the first device consecutively, and
wherein the renewing averages the contents information input by a user and the contents information renewed and received consecutively, and renews the received the contents information which has been renewed and received consecutively.

5. The method as claimed in one of claim 1 to claim 4, wherein the transmitting transmits the renewed contents information directly to an IP address of the second device according to a P2P method.

6. The method as claimed in one of claim 1 to claim 5, wherein the transmitting, comprising:
displaying a list of devices capable of receiving the renewed contents information; and
transmitting the renewed contents information to the first device selected from the list.

7. The method as claimed in one of claim 1 to claim 6, further comprising:
wherein the contents information includes information regarding broadcasting contents, and
the method, further comprising:
displaying the information regarding broadcasting contents received from the first device on an EPG screen.

8. The method as claimed in one of claim 1 to claim 7, wherein the contents information includes a score regarding broadcasting contents, and
the method, further comprising:
arranging broadcasting contents broadcast in a same time frame based on the score.

9. The method as claimed in one of claim 1 to claim 8, wherein the contents information includes at least one of information regarding broadcasting contents which are currently broadcast, already broadcast, and will be broadcast.

10. The method as claimed in one of claim 1 to claim 9, wherein the transmitting, further comprising:
transmitting the renewed contents information to a plurality of second, or transmitting a plurality of renewed contents information regarding a plurality of contents to the second device.

11. The method as claim in one of claim 1 to claim 10, wherein the contents information received from the first device includes contents recommending accumulated and generated by at least one peer device and the number of the at least one peer device to show reliability of the information regarding recommended contents.

12. A multi-media device, comprising:
an interface to send and receive contents information; and
a control unit to renew contents information received from the first device using contents information input by a user, and transmits the renewed contents information to the second device.

13. The multi-media device as claimed in claim 13, wherein the control unit renews contents information received from the first device using the input contents information and the contents information which has been renewed and received consecutively in at least one of the first device.

14. The multi-media device as claimed in claim 12 or claim 13, wherein the multi-media device includes a broadcasting output apparatus to receive broadcasting contents from a broadcasting station or an external device and output them, and
wherein the control unit displays information regarding the broadcasting contents received from the first device on an EPG screen.

15. The multi-media device as claimed in one of claim 12 to claim 14, wherein the control unit transmits the renewed contents information to a plurality of second devices or transmits a plurality of renewed contents information regarding a plurality of contents to the second device.
